(19) Europäisches Patentamt
European Patent Office
Office européen des brevets

(11) EP 0 589 385 B1

(12) # EUROPÄISCHE PATENTSCHRIFT

(45) Veröffentlichungstag und Bekanntmachung des Hinweises auf die Patenterteilung:
**03.06.1998 Patentblatt 1998/23**

(21) Anmeldenummer: **93115085.8**

(22) Anmeldetag: **20.09.1993**

(51) Int Cl.[6]: **C08J 5/18**, C08L 51/00, C08L 53/00, C08L 33/10, C09J 7/02 // (C08L33/10, 53:02)

(54) **Heisssiegelfähige Kunststoff-Folien**

Heat-sealable plastic films

Feuilles plastiques thermoscellables

(84) Benannte Vertragsstaaten:
**AT BE CH DE DK ES FR GB IT LI NL SE**

(30) Priorität: **19.09.1992 DE 4231395**
**19.09.1992 DE 4241682**

(43) Veröffentlichungstag der Anmeldung:
**30.03.1994 Patentblatt 1994/13**

(73) Patentinhaber: **Röhm GmbH**
**64293 Darmstadt (DE)**

(72) Erfinder:
- **Maul, Jürgen, Dr.**
  **D-45772 Marl (DE)**
- **Siol, Werner, Dr.**
  **D-64297 Darmstadt (DE)**
- **Terbrack, Ulrich**
  **D-64354 Reinheim (DE)**

(56) Entgegenhaltungen:
**EP-A- 0 306 785** **EP-A- 0 501 329**
**EP-A- 0 538 139** **EP-A- 0 548 721**

- **Saunders, Organic Polymer Chemistry, 2.Auflage(1988), Seiten 82-85**
- **Informationsblatt zu "cariflex", Shell Chemicals, February 1992**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 589 385 B1

Printed by Jouve, 75001 PARIS (FR)

## Beschreibung

Gebiet der Erfindung

Die Erfindung betrifft heißsiegelfähige Kunststoff-Folien, bestehend aus einer Mischung aus einem schlagzähen Polystyrolharz PS und einem Methacrylat-Copolymerisat P zum dichtenden Verschließen von Kunststoff-Behältern, beispielsweise aus Polystyrol. Insbesondere eignen sich die Kunststoff-Folien zum Versiegeln von Behältern, in denen Lebensmittel aufbewahrt werden.

Stand der Technik

An die Stelle von Gefäßen und Behältern aus Holz oder aus anorganischen Werkstoffen wie Metall, Glas oder Keramik sind in der Gegenwart vielfach Kunststoff-Produkte getreten, insbesondere bei Behältern, die zur Konservierung von Lebensmitteln dienen.
Ein maßgeblicher Gesichtspunkt der Lebensmittelkonservierung, sei es durch Dehydratisierung, Gefrieren oder Sterilisieren, ist die vollständige Verhinderung mikrobiellen Wachstums. Daraus ergibt sich vielfach der Zwang, die Behälter gasdicht zu verschließen. Darüber hinaus sind bei Kunststoffbehältern die mechanische Stabilität, die Kontrolle des Wassergehalts, sowie die Einwirkung der Atmosphäre und des Lichts auf die konservierten Lebensmittel zu berücksichtigen (vgl. Ullmann's Encyclopedia of Industrial Chemistry, 25th Ed., Vol. A11, Seiten 523 bis 560, 583 bis 618, Verlag Chemie Weinheim, 1988; dort werden auch die geltenden Normen abgehandelt).
Zum Verschließen von Kunststoff-Gefäßen werden in der Lebensmitteltechnologie, insbesondere bei Molkereiprodukten wie beispielsweise Joghurt, weithin mit einem Siegellack beschichtete Aluminiumdeckel verwendet.

Vielfach bestehen derartige Aluminiumdeckel aus einem dreischichtigen Laminat, dessen äußere Schicht häufig aus (biaxial orientiertem) Polyethylenterephthalat (O-PET), biaxial orientiertem Polypropylen (O-PP) oder Polyamid (O-PA) oder aus Cellulose besteht. Die sich an die aus Aluminium bestehende Mittelschicht anschließende heißsiegelbare innere Schicht besteht dagegen gewöhnlich aus Polyethylen, Ethylen-Copolymerisaten oder aus Polypropylen, G. Stehle, Neue Verpackung 9/1991, Seiten 94 bis 101). In US-PS 4 753 708 werden beispielsweise heißsiegelfähige, zur Versiegelung verschiedener Untergründe, beispielsweise Polystyrol-Untergründe, geeignete Beschichtungsmittel für Metallfolien beschrieben, bestehend aus einer filmbildenden Dispersion eines Pfropfpolymerisats auf Basis Olefin/(Meth)acrylat in einem organischen Lösungsmittel. Gegen die Verwendung von Aluminium zur Verpackung beispielsweise von Lebensmitteln werden jedoch zunehmend ökologische und ökonomische Gründe in die Diskussion gebracht. Daher kommen auch Kunststoff-Folien anstelle von Aluminium zur Anwendung, die mit einem siegelfähigen Lack versehen sind. Als relativ preisgünstiges Material für siegelfähige Folien mit guter mechanischer Festigkeit und guten Barriereeigenschaften gegenüber Gaspermeation spielt Hart-PVC eine ganz erhebliche Rolle, wobei als Siegellackschicht gewöhnlich ein Acrylharz dient, dessen Haftfestigkeit und Aufschmelzpunkt durch Zusätze zweckmäßig modifiziert werden kann.
In DE-A 35 31 036 werden durch Koextrusion herstellbare Kunststoff-Folien beschrieben, die aus einer siegelfähigen Schicht aus schlagzähem Polystyrol, einem Blockpolymerisat und einem Gleitmittel bestehen, gegebenenfalls aufgebracht auf einer Trägerschicht.
In EP-A 0 406 681 wird auf die Problematik bei Verwendung von heißsiegelfähigen Kunststoff-Folien anstelle von Aluminiumlaminaten hingewiesen. Einschränkend ist im Regelfall der wesentlich engere Verarbeitungsbereich (zwischen 10 und 20 K), der ziemlich konstant eingehalten werden muß, um eine störungsfreie Produktion und einen einwandfreien Gebrauch der versiegelten Packung zu garantieren. Bei Abfüllanlagen mit mehreren Kavitäten zum gleichzeitigen Abfüllen von Bechern ist diese Voraussetzung nicht immer erfüllt. EP-A 0 406 681 beschreibt zur Lösung o.g. Probleme eine nach dem Koextrusionsverfahren oder durch Kaschieren hergestellte Kunststoff-Folie aus zwei Schichten A und C sowie gegebenenfalls einer Schicht B und gegebenenfalls je einer Schicht eines Haftvermittlers D zur Verbindung von jeweils zweien der Schichten A, gegebenenfalls B und C, bestehend aus 1 - 50 % einer Schicht aus einem heißsiegelfähigen, schlagzähen Polystyrol A, bis zu 95 % einer Trägerschicht B und 1 bis 99 % einer hochschmelzenden Kunststoff-Schicht C, wobei die Summen der Stärken oder des Gewichts von A, gegebenenfalls B und C jeweils 100 % ist.

In der europäischen Patentanmeldung EP-A 0 437 745 wird eine siegelfähige, thermoplastische Formmasse beansprucht, die aus mindestens 4 Komponenten besteht: einem schlagzähen Polystyrolharz A, einem Blockpolymeren B, einem Gleitmittel C sowie mindestens einem Homo- oder Copolymerisat D eines aliphatischen Olefins. Die siegelfähige Formmasse wird auf übliche Trägerfolien, die vorzugsweise aus Polystyrol bestehen, aufgebracht, wobei die Folien zum Versiegeln von Behältern aus Polystyrol oder Polyolefinen wie Polyethylen oder Polypropylen dienen.
In den noch unveröffentlichten deutschen Patentanmeldungen P 41 42 691.6 und P 41 42 692.4 werden demgegenüber heißsiegelfähige Kunststoff-Folien auf Basis Polystyrolverträglicher Methacrylate beschrieben, wobei die Folien aus einer Formmasse mit zweiphasigem, Aufbau bestehen, bei der die Zähphasenpfropfäste und die ungepfropften Anteile

mit Polystyrol verträglich sind. Von den Anmeldungen umfaßt werden auch mehrschichtige Verbundfolien, bei denen die o.g. Formmassen zu Trägerfolien verarbeitet werden und in einem zweiten Schritt mit Polystyrol-verträglichen Formmassen, die einen zweiphasigen Aufbau besitzen, beschichtet werden.

EP-A 0 306 785 beschreibt verträgliche Polymermischungen bestehend aus (I) 0,1 - 99,9 Gew.-% eines Polymerisats P1 aus (α-Methyl)-Styrol und (II) 99,9 - 0,1 Gew.-% eines Copolymerisats P2 aus 30 - 90 Gew.-% Methylmethacrylat oder Ethylmethacrylat, 70 - 10 Gew.-% eines Methacrylsäureesters mit 3 - 24 Kohlenstoffatomen im Alkylrest, sowie ggf. 0 - 10 Gew.-% weiterer Monomere. Die Polymermischungen können gegebenenfalls eine unverträgliche Polymerkomponente P3, wie z. B. Polybutadien oder Polybutylacrylat enthalten. Die beschriebenen Polymermischungen haben vor allem die Aufgabe die Gebrauchsfähigkeit von Gegenständen aus Polystyrol, z. B. deren Witterungsbeständigkeit, zu verbessern.

EP-A 501 329 beschreibt verträgliche Polymermischungen PM, die aus den Komponenten (A) 0,1 - 99,9 Gew.-% eines Polystyrols und (B) 99,9 - 0,1 Gew.-% eines Methacrylsäureesters aufgebaut sind, wobei der Methacrylsäureester zu a) mehr als 90 - 100 Gew.-% aus Ethylmethacrylat und b) zu null bis weniger als 10 Gew.-% aus mit Ethylmethacrylat copolymerisierbaren Monomeren aufgebaut ist. Die Polymermischungen können gegebenenfalls mit einem Polymeren P3 schlagzäh modifiziert werden. Die Polymermischungen eignen sich u. a. zur Herstellung von optischen Gradientenfasern.

Aufgabe und Lösung

Die hohe Permeabilität für Gase und Dämpfe kann bei einigen Kunststoffen bei Verwendung als Verpackungsmaterial zu Problemen bei der Lebensmittelkonservierung führen.

Das führt zu den im Stand der Technik beschriebenen mehrschichtigen Folien (DE-A 35 31 036, EP-A 0 406 681, EP-A 0 437 745), die allerdings einen erhöhten Aufwand bei der Herstellung und eine problematische Entsorgung bedingen, bei der ein sortenreines Recycling nicht möglich ist.

Dem weiterhin bestehenden Bedarf nach heißsiegelfähigen Folienmaterialien, die zum gasdichten Verschließen von Kunststoffbehältern, insbesondere solchen aus Polystyrol, in homogener Schicht und ohne zusätzliche Oberflächenbehandlung geeignet sind, wird in den deutschen Patentanmeldungen P 41 42 691.6 und P 41 42 692.4 genügt. Die dort beschriebenen Folien sind unter Verwendung herkömmlicher Anlagen direkt auf Polystyrol siegelbar.

Bei Mehrschicht-Verbunden, bestehend aus einer Trägerfolie aufgebaut aus einer Polystyrol-verträglichen Formmasse mit zweiphasigem Aufbau und einer Siegelschicht aus einer Polystyrol-verträglichen leichtfließenden Formmasse (Ansprüche 7 und 8 in P 41 42 691.6 bzw. Ansprüche 5 und 6 in P 41 42 692.4), macht sich jedoch der große Viskositätsunterschied zwischen schwerfließender Trägerschicht-Formmasse und leichtfließender Siegelschicht-Formmasse bei der Verarbeitung störend bemerkbar.

Darüber hinaus weisen solche Rein-(Meth)acrylat-Folien bei mechanischer Belastung eine nicht immer genügende Weiterreißfestigkeit auf.

Es wurde nun gefunden, daß heißsiegelfähige Kunststoff-Folien KF die Anforderungen hinsichtlich Recyclierbarkeit, mechanischer Stabilität, Verarbeitbarkeit und Herstellbarkeit, insbesondere durch Coextrusion weitestgehend erfüllen.

Diese heißsiegelfähigen Kunststoff-Folien KF sind aufgebaut aus Mischungen M, bestehend aus 1 bis 99 Gew.-Teilen eines schlagzähen Polystyrol-Harzes PS aus einem Blockcopolymeren BC bestehend aus:

A) 20 bis 80 Gew.-% Styrol und
B) 80 bis 20 Gew.-% Butadien und/oder Isopren

und 99 bis 1 Gew.-
Teilen eines Copolymerisats P, bestehend aus

p1) 20 bis 90 Gew.-% Methylmethacrylat und/oder Ethylmethacrylat,
p2) 10 bis 80 Gew.-% mindestens eines Monomeren der Formel:

$$CH_2 = C(CH_3) - C(=O) - O - R_1 \qquad (I)$$

worin $R_1$ für einen Alkylrest mit 3 bis 24 Kohlenstoffatomen steht,

und

p3) 0 bis 10 Gew.-% eines oder mehrerer mit den Monomeren p1) und p2) copolymerisierbaren Monomeren, das sich von den Monomeren p1) und p2) unterscheidet,

wobei sich die Monomeren p1), p2) und p3) zu 100 Gew.-% ergänzen.

Als schlagzähe Polystyrolharze werden insbesondere solche Polymerisate, wie beispielsweise Styrol-Butadien-Styrol-Blockcopolymere BC, verwendet, die der Verbesserung der Zähigkeit der Kunststoff-Folie KF und deren Verarbeitbarkeit auf dem Extruder dienen. Die Kunststoff-Folien KF weisen Dicken zwischen 50 und 500 µm, bevorzugt zwischen 80 und 400 µm auf.

Gegebenenfalls enthält die Kunststoff-Folie KF noch eine Deckschicht, die das Anhaften der Siegelfolie am Siegelkopf verhindert.

## Durchführung der Erfindung

### Das schlagzähe Polystyrolharz PS

Unter den schlagzähen Polystyrolharzen PS sind zweiphasige Polymermischungen zu verstehen, mit einer die Matrix bildenden polymeren Hartphase HP, die vorzugsweise vinylaromatische Monomereinheiten enthält, worin die polymere Zähphase ZP bildenden Partikel mit Teilchengrößen zwischen 0,01 und 20 um fein dispergiert sind.
Der Anteil der polymeren Hartphase HP an der zweiphasigen Polymermischung beträgt vorzugsweise 50 bis 95 Gew.-%, besonders vorzugsweise 60 bis 95 Gew.-%, ganz besonders vorzugsweise 80 bis 95 Gew.-%. Als vinylaromatische Monomereinheiten, die die Hartphase HP aufbauen, können insbesondere Styrol, α-Methylstyrol, p-Methylstyrol oder weitere substituierte Styrole bzw. Mischungen hiervon, bevorzugt jedoch Styrol verwendet werden.
Die die Zähphase ZP ausbildenden Polymeren weisen Glastemperaturen Tg < 10 Grad C, bevorzugt < -10 Grad C auf und werden gewöhnlich unter dem Oberbegriff "Elastomere" oder "Kautschuke" zusammengefaßt. Die gegebenenfalls vernetzten Polymeren sind beispielsweis Polysiloxane, Ethylenvinylacetat-Copolymere, Polyacrylate, bevorzugt Polyolefine sowie besonders bevorzugt Polydiene.
Bei den Polyolefinen handelt es sich vorzugsweise um Homo- bzw. Copolymerisate des Ethylens, Propylens oder Isobutylens (vgl. Ullmanns Enzyklopädie der technischen Chemie, 4. Aufl., Bd. 19, Seiten 167 bis 226, Verlag Chemie, 1980). Im allgemeinen liegen die mittleren Molekulargewichte Mw (Bestimmung beispielsweise per Gelpermeationschromatographie: vgl. hierzu beispielsweise H.F. Mark et al. Encyclopedia of Polymer Science & Engineering, 2nd. Ed. Vol. 10, Seiten 1 bis 19, J. Wiley, 1987) der unvernetzten Polyolefine im Bereich zwischen $5 \times 10^4$ und $10^6$ Dalton. Von besonderem Interesse sind Ethylen-Propylen-Dien (EPDM)-Terpolymerisate, wobei als Dienkomponente vorzugsweise Dicyclopentadien, Ethylidennorbornen oder Hexadien eingesetzt werden (vgl. Ullmann loc.cit., Bd. 13, Seiten 619 bis 621; Kirk-Othmer, Encyclopedia of Industrial Chemistry, 3rd. Ed. Vol. 8, Seiten 492 bis 500, Vol. 7, Seite 687, 693, J. Wiley, 1979; zur Herstellung vgl. S. Cesca, J. Polym. Sci., Macromol. Rev., 10, Seite 1, 1975).
Bei den besonders bevorzugten Polydienen handelt es sich insbesondere um die einschlägig bekannten Kautschuk-Typen wie Polybutadien, Poly-2-chlorbutadien oder Polyisopren (vgl. Ullmann loc.cit., 4. Aufl., Bd. 13, Seiten 595 bis 635). Die mittleren Molekulargewichte Mw der unvernetzten Polydiene liegen in der Regel im Bereich zwischen $5 \times 10^4$ und $10^6$ Dalton. Vorzugsweise ist die Zähphase ZP aus Polybutadien aufgebaut, welches besonders bevorzugt mit Styrol-Monomereinheiten gepfropft ist. Hierfür sind in der Regel besonders Polybutadiene vom medium- oder high-cis-Typ geeignet, die mittlere Molekulargewichte zwischen $7 \times 10^4$ und $4{,}5 \times 10^5$ Dalton aufweisen. Die gegebenenfalls vernetzte Zähphase liegt fein dispergiert in einer vorzugsweise aus Styrol-Monomereinheiten bestehenden Hartphasen (HP)-Matrix vor, wobei die Polymerisation der die Hartphase HP aufbauenden Monomeren in Gegenwart der Polybutadien-Moleküle vorzugsweise radikalisch initiiert durchgeführt wird. Die mittleren Molekulargewichte der Hartphasen-Polymere HP liegt zwischen $5 \times 10^4$ und $5 \times 10^5$, vorzugsweise zwischen $10^5$ und $3{,}5 \times 10^5$ Dalton. Die Zähphase ZP ist in Anteilen von 5 bis 50 Gew.-%, vorzugsweise zwischen 5 und 40 Gew.-%, besonders bevorzugt zwischen 5 und 20 Gew.-% in der Hartphase HP vorhanden. Die mittleren Teilchengrößen der dispergierten Zähphase ZP, deren Bestimmung beispielsweise elekronenmirkoskopisch erfolgen kann, liegen im Bereich zwischen 0,01 und 20 µm, vorzugsweise zwischen 0,3 und 10 µm.
Die Herstellung der schlagzähen Polystyrolharze PS ist bekannt, so werden hochschlagzähe Polystyrolharze beispielsweise durch Substanz-, Suspensions- oder Emulsionspolymerisation hergestellt (vgl. Kirk-Othmer, lo.c.cit, Bd. 17, Seiten 470, 471; Bd. 21, Seiten 811 bis 816, J. Wiley 1982, 1983).
Darüber hinaus kann das schlagzähe Polystyrolharz Styrol-Butadien-Blockcopolymere Butadien-Blockcopolymere bzw. Styrol-Isopren-Blockcopolymere enthalten, wobei sowohl 2-Block-, 3-Block- als auch Sternblockcopolymere zum Einsatz kommen können. (Zur Synthese von Blockpolymeren aus Styrol und einem zweiten Monomeren vgl. beispielsweise Houben-Weyl, Methoden der organischen Chemie, 4. Aufl., Band E20/2.

Teil, Seiten 987 bis 993, Georg Thieme, Stuttgart, 1987). Insbesondere Styrol-Butadien-Styrol-3-Blockcopolymere oder sternförmige Styrol-Butadien-Copolymere mit einem hohen Gehalt an Butadien, beispielsweise über 50 Gew.-%,

eignen sich zur Modifizierung der Polystyrolharze PS, insbesondere hinsichtlich der Weiterreißfestigkeit. So enthalten die Polystyrolharze in einer bevorzugten Ausführungsform wenigstens 2 Gew.-% eines Styrol-Butadien-Styrol-Blockcopolymeren, in einer besonders bevorzugten Ausführungsform 5 bis 20 Gew.-% eines Styrol-Butadien-Styrol-Blockcopolymeren mit 50 bis 80 Gew.-% Butadienanteilen.

Darüber hinaus kann das Polystyrolharz PS gänzlich aus Blockcopolymeren bestehen. In diesem Fall wird jedoch ein geringerer Anteil an Butadien im Blockcopolymeren gewählt, so daß der Butadien-Gehalt des Polystyrolharzes PS insgesamt weniger als 50 Gew.-%, bevorzugt weniger als 40 Gew.-%, beträgt. Besonders bevorzugt sind Butadiengehalte zwischen 10 und 30 Gew.-% bezogen auf das Polystyrolharz PS.
Desweiteren kann das Polystyrolharz PS weitere Polymeranteile, wie beispielsweise Polybuten in Anteilen von 2 bis 6 Gew.-% bezogen auf PS oder die Bestandteile der Siegelschicht in Anteilen von bis zu 50 Gew.-% bezogen auf PS enthalten.

Besonders bevorzugt sind jedoch als Polystyrolharze PS schlagzähe Polystyrol-Typen, die Zähphasenpartikel enthalten, wie sie beispielsweise durch radikalische Polymerisation von Styrol in Gegenwart von Polybutadien erhalten werden. In der Regel haben die Zähphasenpartikel eine Größe von 1 bis 5 µm, bevorzugt 2 bis 4 µm, wobei der Polybutadiengehalt dieser Polystyrolharze PS mit Zähphasenpartikeln im allgemeinen im Bereich zwischen 7 und 15 Gew.-%, bevorzugt zwischen 8 und 11 Gew.-% bezogen auf PS liegen.Darüber hinaus kann das Polystyrolharz PS noch die bei der Polymerverarbeitung üblichen Zuschläge, wie beispielsweise Gleitmittel (z.B. Paraffinöl), Stabilisatoren wie z.B. Radikalfänger und/oder Pigmente enthalten.

Das Copolymerisat P

Das Copolymerisat P besteht im wesentlichen aus den oben genannten Bausteinen p1), p2) und p3). Die Anteile der Monomereinheiten p1), p2) und p3), die das Copolymerisat P aufbauen, ergänzen sich zu 100 Gew.-%.
Das Copolymerisat P wird in an sich bekannter Weise aus den Monomeren p1), p2) und gegebenenfalls p3) durch radikalische oder anionische Polymerisation (vgl. H. Rauch-Puntigam, Th. Völker, Acryl- und Methacrylatverbindungen, Springer-Verlag, Heidelberg, 1967; Houben-Weyl, 4. Aufl. Bd. XIV/1, Seiten 1010 ff, Geord Thieme Verlag, 1961) bzw. durch Gruppentransfer-Polymerisation (vgl. beispielsweise Houben-Weyl, loc.cit., Bd. E20, Seiten 153 bis 160, 1987) gebildet. Die Polymerisation von P kann in Masse, Suspension, Emulsion oder Lösung durchgeführt werden. Bei der radikalischen Polymerisation werden vorzugsweise Initiatoren, wie Peroxid-Verbindungen, besonders organische Peroxide wie Dibenzoylperoxid oder Lauroylperoxid, Perester wie t-Butylperneodecanoat oder t-Butyl-per-2-ethylhexanoat, Perketale, Azoverbindungen wie Azodiisobutyronitril oder Redox-Initiatoren in Mengen von 0,01 bis 5 Gew.-% bezogen auf die Monomeranteile eingesetzt. Die Polymerisation auslösenden Radikale können auch durch hochenergetische Strahlung erzeugt werden. Als Polymerisationsregler kommen beispielsweise herkömmliche Schwefelverbindungen, wie beispielsweise Mercaptoverbindungen in Mengen von 0,1 bis 5 Gew.-% bezogen auf die Monomeranteile, in Frage. Im allgemeinen liegen die mittleren Molekulargewichte Mw (zur Bestimmung von Mw s.o.) zwischen 2 x $10^3$ und $10^6$ Dalton, vorzugsweise zwischen $10^4$ und 2 x $10^5$ Dalton, besonders bevorzugt zwischen 2 - $10^4$ und 1 x $10^5$ Dalton. Die Uneinheitlichkeit U ( = Mw/Mn -1) ) liegt im allgemeinen im Bereich zwischen 0,1 und 3.

Vorzugsweise enthalten die Copolymerisate P 20 bis 90 Gew.-% Monomereinheiten p1) und 10 bis 80 Gew.-% Monomereinheiten p2) der Formel I, wobei $R_1$ für einen Alkylrest mit 3 bis 24 Kohlenstoffatomen, vorzugsweise 4 bis 18 Kohlenstoffatomen, steht. Darüber hinaus ist die Befolgung der Regel wichtig, daß mit steigender Zahl der Kohlenstoffatome in $R_1$ der relative Anteil des Monomeren p2) am Copolymerisat P abnehmen soll, d.h. der relative Anteil dieser Monomeren soll sich gegenläufig zur Zahl der Kohlenstoffatome in $R_1$ verhalten. Quantitativ kann die Regel für den Anteil der Monomeren p2) am Copolymerisat P wie folgt gefaßt werden (siehe auch DE-OS 37 30 025 = US-Patent 4 952 455):

$$\text{Gew.-\% Monomer p2} = \frac{\text{(Molekulargewicht des Monomeren p1)}}{\text{(Molekulargewicht des Monomeren p1 + Molekulargewicht des Monomeren p2)}} \times 100$$

Monomere p2) sind gemäß der Formel I Methacrylsäureester, worin $R_1$ für Propyl, n-Butyl, Isobutyl, Amyl, Isoamyl, n-Pentyl, n-Hexyl, n-Octyl, 2-Ethylhexyl, n-Decyl, n-Dodecyl, n-Tetradecyl, n-Hexadecyl, oder n-Stearyl sowie für die Alkylreste der Talgfettalkohole steht. Ebenso kann $R_1$ für einen gegebenenfalls substituierten Cycloalkylrest stehen, wie Cyclopentyl, Cyclohexyl, Cycloheptyl, wobei $R_1$ = Cyclohexyl bevorzugt ist.

Die Comonomeren p3) können in Mengen von 0 bis 10 Gew.-%, vorzugsweise in Mengen von 1 bis 8 Gew.-% im Copolymerisat P anwesend sein.
Comonomere p3) sind beispielsweise: (Meth)acrylsäure, Salze der (Meth)acrylsäure, Hydroxyalkylester der (Meth) acrylsäure, wie beispielsweise 2-Hydroxyethyl(meth)-acrylat oder 2-Hydroxypropyl(meth)acrylat,
Alkoxyalkylester der (Meth)acrylsäure, wie 2-Butoxyethyl-(meth)acrylat oder 2-Methoxyethyl(meth)acrylat, sowie Aminoalkylester der (Meth)acrylsäure, wie 2-Dimethylaminoethyl(meth)acrylat, 2,2,6,6-Tetramethylpiperidyl-4-(meth)acrylat oder 3-Dimethylaminopropyl(meth)acrylat. Darüber hinaus kann p3 auch Styrol oder einen oder mehrere $C_1$-$C_{20}$-Ester der Acrylsäure darstellen. Im allgemeinen ist der Anteil der Acrylsäureester am Copolymerisat P jedoch auf < 5 Gew.-% beschränkt, bevorzugt sind Copolymerisate P, die < 1 Gew.-% Ester der Acrylsäure enthalten. Ganz besonders bevorzugt sind solche Copolymerisate P, die keine Anteile an Acrylsäureestern enthalten.

Die Mischungen M aus schlagzähem Polystyrolharz PS und Copolymerisat P

Die Copolymerisate P bilden im allgemeinen mit den für sich genommenen Hartphasenpolymerisaten HP der schlagzähen Polystyrolharze PS verträgliche Polymermischungen PM, deren Charakterisierung nach anerkannten Kriterien erfolgt (vgl. hierzu Kirk-Othmer, loc.cit., Vol. 18, Seiten 457 bis 460; J. Brandrup, E.H. Immergut, Polymer Handbook, 2nd. Ed., III, Seite 211, Wiley Interscience, 1975). Bei den verträglichen Polymermischungen PM beobachtet man einen Brechungsindex und eine einzige Glasübergangstemperatur, die zwischen den Glasübergangstemperaturen der beiden Polymerisat-Komponenten P und HP liegt. Als weiterer Hinweis auf die Verträglichkeit wird das Auftreten der LCST (Lower Critical Solution Temperature) herangezogen, deren Existenz auf dem Vorgang beruht, daß sich beim Erwärmen die bis dahin klare transparente Mischung in verschiedene Phasen auftrennt und optisch trübe wird, was einen eindeutigen Beweis dafür darstellt, daß die ursprüngliche Polymermischung aus einer einzigen, im thermodynamischen Gleichgewicht befindlichen Phase bestand (vgl. hierzu beispielsweise D.R. Paul, Polymer Blends & Mixtures, Seiten 1 bis 3, Martinus Nijhoff Publishers, Dordrecht, Boston, 1985). Wenn auch eine völlige Verträglichkeit im Sinne eines Polymerblends mit nur einer von der Zusammensetzung abhängigen Glastemperatur in dem hier vorliegenden Polymergemisch (Polybutadien, Polystyrol, Methacrylatcopolymer) nicht gegeben ist, so findet man doch bei Einhaltung der in Formel 1 (siehe auch DE-OS 37 30 025) gegebenen Zusammensetzung für das Copolymere P eine gute Haftung auf dem zu siegelnden Polystyroluntergrund. Darüber hinaus ermöglicht die gute Verträglichkeit von Kunststoff-Folie KF und zu siegelndem Polystyroluntergrund ein einfaches Recycling des Gesamtverbundes.

Erfindungsgemäß gut brauchbare Copolymerisate P können zum Beispiel die Zusammensetzung 40 - 60 Gew.-% Methylmethacrylat/60 - 40 Gew.-% Butylmethacrylat besitzen. Ebenso sind beispielsweise Copolymerisate P aus 70 Gew.-% Methylmeth-acrylat und 30 Gew.-% n-Decylmethacrylat brauchbar. Vorliegende Beobachtungen scheinen darauf hinzudeuten, daß zwischen den Methyl- bzw. Ethyl-Substituenten der Monomerkomponente p1) und den Substituenten $R_2$ der Monomerkomponente p2) ein Unterschied von $\geq 2$, bevorzugt $\geq 3$ Kohlenstoffatomen bestehen sollte. Von besonderem Interesse sind Copolymere aus 50 Gew.-% Methylmethacrylat und 50 Gew.-% Butylmethacrylat mit einem J-Wert von 15 bis 70 ml/g, bevorzugt J = 20 bis 40 ml/g (zur Bestimmung des J-Werts, der in Chloroform bei 25 Grad C durchgeführt wird und der ein Maß für das Molekulargewicht des Copolymerisats P ist, vgl. DIN 51 562). Von besonderem Interesse sind auch Copolymere aus ca. 50 Gew.-% Ethylmethacrylat und ca. 50 Gew.-% Butylmethacrylat. In diesem Fall ist ein J-Wert von 20 bis 50, bevorzugt 25 bis 40 ml/g empfehlenswert.

Von besonderem Interesse sind Mischungen M, bestehend aus 20 bis 90 Gew.-% der oben beschriebenen Copolymeren P und 80 bis 10 Gew.-% eines oder mehrerer Blockcopolymerer BC, aufgebaut aus mindestens einem Block eines oder mehreren Monomeren aus der Gruppe Styrol, -Methylstyrol und kernalkylierten Styrol und mindestens einem Block ausgewählt aus der Gruppe Isopren und Butadien. Das Blockcopolymere BC kann linear, verzweigt oder sternförmig aufgebaut sein.

Besonders interessant als Abmischkomponente für das Copolymerisat P sind hierbei Blockcopolymere BC mit 2 oder mehreren Polystyrolblöcken. Bevorzugt sind z.B. lineare Styrol-Butadien-Styrol-(SBS)-3-Blockcopolymere und radial bzwl. sternförmige SBS-Blockcopolymeren.
Besonders bevorzugt sind SBS-Blockpolymeren, die maximal 50 Gew.-% Styrol-Blöcke enthalten. Ganz besonders bevorzugt sind lineare SBS-Triblockcopolymere mit einem Butadiengehalt von ca. 70 Gew.-%.
Neben o.g. Blockcopolymeren BC mit hohem Butadien-Gehalt können auch noch Styrol-Butadien-Blockcopolymere mit Butadien-Gehalten von weniger als 50 Gew.-% anwesend sein.
Mischungen M aus derartigen SBS-Blockcopolymeren mit den Copolymeren P sind einserseits deutlich zäher als das Copolymere P selbst. So zeigt diese Abmischung erhöhte Dehnbarkeit und eine gewisse Weiterreißfestigkeit. Die Blockcopolymer BC/Copolymer P -Mischungen M lassen sich bei niedrigen Temperaturen (z.B. 140 - 200 Grad C) auf schlagzähes Polystyrol siegeln. Besonders vorteilhaft ist jedoch das gute Verhalten dieser Blockcopolymer BC/Copolymer P -Mischung M als Siegelmasse beim Öffnen der damit versiegelten Kunststoffbehälter.
So gestatten die damit versiegelten Kunststoffe ein ruckfreies, weiches Öffnen (Peeling).
Im allgemeinen kommen Mischungen M aus 75 - 25 Gew.-Teilen Blockcopolymeren BC und 25 - 75 Teilen Copolymeren P zur Anwendung.
Besonders interessant sind Mischungen M im Gewichts-Verhältnis 65 -35 bis 35 - 65.

Neben den beschriebenen SBS-Blockcopolymeren mit hohem Butadiengehalt (> 50 Gew.-%) können auch Blockcopolymere BC mit beispielsweise 20 - 40 Gew.-% Butadien zum Einsatz kommen. Bei diesen SBS-Blockcopolymeren handelt es sich im allgemeinen um glasklare, schlagzähe Polystyrol-Formmassen. Auch diese Blockcopolymeren BC lassen sich ausgezeichnet zur Modifizierung der Rheologie der Copolymere P einsetzen. Im allgemeinen ist jedoch das Abzugsverhalten beim Öffnen der mit Kunststoff-Folien KF aus diesen Mischungen M versiegelten Behälter nicht

so gut wie das Abzugsverhalten bei Abmischungen mit SBS-Blockcopolymeren mit einem Butadiengehalt > 50 %. Die Molekulargewichte Mw der eingesetzten SBS-Blockcopolymere liegen im Bereich 50 000 bis 500 000 Dalton, bevorzugt im Bereich 80 000 bis 300 000 Dalton und ganz besonders bevorzugt im Bereich 100 000 bis 250 000 Dalton.

Der Melt-Flow-Index der SBS-Blockcopolymeren (ohne Zusatz von Copolymer P) liegt bei 200 Grad C (5 kg) im allgemeinen im Bereich 4 bis 20 g/10 Minuten, bevorzugt im Bereich 5 bis 10 g/10 Minuten.
Neben diesen besonders bevorzugten Styrol-Butadien-Blockcopolymeren können auch die entsprechenden Blockcopolymeren BC auf Basis Isopren zum Einsatz kommen, bzw. die entsprechenden hydrierten Blockcopolymeren BC (Styrol-(Ethylen-Butylen)-Styrol-Blockcopolymeren bzw. Styrol- (Ethylen-Propylen)-Styrol-Blockcopolymeren.
Die Synthese der Styrol-Butadien(Isopren)-Blockcopolymeren erfolgt im allgemeinen auf dem Wege der anionischen Polymerisation (siehe Houben-Weyl, loc.cit., 4. Aufl., Band E 20/2, Seite 989), dabei kommen in der Regel Lithiumalkyle als Initiatoren zum Einsatz.

Neben der oben genannten Modifizierung der Copolymeren P durch Abmischung mit Blockcopolymeren BC auf Basis SBS ist auch eine Modifizierung durch Elastomer-Copolymer P -Pfropfprodukte möglich. Von besonderem Interesse sind dabei Emulsionspolymerisate mit einer Kern-Schale-Struktur, wobei auf einem Acrylatkautschuk (z.B. Butylacrylat, vernetzt mit Allylmethacrylat) eine Copolymer P -Schale zumindest teilweise aufgepfropft wurde. Diese schlagzähmodifizierten Copolymere P mit einem Elastomeranteil von 1 bis 65, bevorzugt von 10 bis 50 Gew.-% eignen sich als solche oder in Abmischung mit weiteren Copolymeren P als Materialien für die Kunststoff-Folien KF.
Derartig hergestellte und derartig zusammengesetzte Mischungen M weisen hohe Fließfähigkeiten auf und lassen sich als Kunststoff-Folie KF bei niedriger Temperatur (130 bis 200 Grad C) auf den entsprechenden Untergrund (in der Regel Polystyrol) siegeln.

Die heißsiegelfähigen Kunststoff-Folien KF

Die erfindungsgemäßen Kunststoff-Folien KF bestehen aus den oben beschriebenen Mischungen M, enthaltend mindestens 1 Gew.-%, vorzugsweise mindestens 10 Gew.-%, besonders vorzugsweise mindestens 20 Gew.-% schlagzähes Polystyrolharz PS, wie beispielsweise Styrol-Butadien-Styrol-Blockcopolymere BC. Sie können in an sich bekannter Weise, beispielsweise durch Extrusion hergestellt werden. Sie weisen Dicken zwischen 50 und 500 µm, vorzugsweise zwischen 80 und 400 µm auf.
Insbesondere Anteile von 20 bis 90, bevorzugt 30 bis 80 und ganz besonders bevorzugt von 35 bis 65 Gew.-% von Blockcopolymeren BC an der Mischungen M sind für die heißsiegelbaren Kunststoff-Folien KF geeignet.

Die erfindungsgemäß erhaltenen Kunststoff-Folien KF lassen sich problemlos heißsiegeln (vgl. G. Stehle, Neue Verpackung loc.cit.), wobei die Verarbeitungssicherheit hervorzuheben ist. Die Folien KF sind tiefziehbar, stanzbar und bedruckbar. Sie sind mit den üblichen Methoden der Kunststoff-Einfärbung gut einfärbbar (vgl. Becker-Braun, Kunststoff-Handbuch, Bd. 1, Seiten 539 bis 540, Carl Hanser, 1990).
Die Kunststoff-Folien KF werden mit besonderem Vorteil zum Siegeln von Kunststoffbehältern, speziell solchen aus Polystyrol und schlagzähmodifiziertem Polystyrol eingesetzt. Die aus den erfindungsgemäßen Kunststoff-Folien KF hergestellten aufgesiegelten Deckel der Kunststoffbehälter entsprechen den eingangs genannten Forderungen nach mechanischer und chemischer Stabilität, thermischem Verhalten und Verarbeitbarkeit in hervorragendem Maße. Die Siegelbedingungen (z.B. die Temperatur der Siegellacke oder der Druck) können in weiten Grenzen variiert werden.
Von besonderem Interesse ist die sehr leichte Siegelbarkeit dieser Folie, die auch durch eine 100 µm dicke Folie eine Siegelung bereits bei 140 Grad C in 0,5 sec. gestattet. Dicke Folien erfordern entsprechend höhere Temperaturen oder längere Siegelzeiten. Dies ist in erster Linie eine Konsequenz der außerordentlich guten Heißsiegelbarkeit der Mischungen M.

Die niedrigen Siegeltemperaturen machen häufig eine Antiblockbeschichtung zum Verhindern des Aufhaftens der Folie am heißen Siegelkopf überflüssig.
Ganz allgemein kann jedoch die Kunststoff-Folie KF mit Vorteil eine zusätzliche Schutzschicht Z gegen das Anbacken am Siegelkopf enthalten. Dies kann einerseits der häufig zur Kennzeichnung der Behälter verwendete Schutzlack sein, andererseits kann die Kunststoff-Folie eine ca. 2 - 50 µm, bevorzugt ca. 5 - 20 µm dicke Antiblockschicht Z aufweisen, aufgebaut aus einem hochschmelzenden Kunststoff, der im Temperaturbereich bis 200 (bevorzugt bis 250 Grad C) nicht am Siegelkopf anhaftet. Als solche hochschmelzenden Kunststoffe kommen beispielsweise zum einen Polyamide, z.B. Polyamid 6, Polyterephthalsäureester z.B. Polybutylenterephthalat in Frage, darüber hinaus schlagzäh modifiziertes PPE und allgemein Polymere mit einem Erweichungspunkt > 200 Grad C.

Ferner ist an Eigenschaften hervorzuheben:

- die Folien sind gut stanzbar;
- beim Stanzen anfallende Abfälle können zu neuen Folien verarbeitet werden;
- die Folien sind bedruckbar;
- Die Kunststoff-Folien KF können sehr zäh eingestellt werden, so daß die Folien widerstandsfähig und gut stapelbar

sind;

- das Polymethacrylat P, das schlagzähe Polystyrolharz PS und das (schlagzähe) Polystyrol des Behälters sind miteinander vollkommen verträglich, so daß ein gemeinsames Recycling von Behälter und Deckel möglich ist.

Die erfindungsgemäßen Folien sind direkt auf Polystyrol siegelbar. Im allgmeinen werden die Deckelfolien auf Behältern aus schlagzähem Polystyrol, in der Regel Extrusions-Polystyrol, z.B. Vestyron ® 638 gesiegelt. Häufig enthalten die für die Behälter eingesetzten schlagzähen Polystyrole weiteres glasklares Polystyrol, beispielsweise kann ein Behälter aus einer Mischung Vestyron ® 638 und Vestyron ® 224 (beides Produkte der Fa. Hüls AG) hergestellt werden.

- die Folien können auf den üblichen, für das Heißsiegeln verwendeten Anlagen gesiegelt werden (beispielsweise: Siegeldruck < 2 bar, Zeitbedarf 0,1 bis 2 sec., Siegeltemperatur 130 bis 220 Grad C).

Vorzugsweise kommen Siegelköpfe mit einer Teflon- oder einer anderen das Blocken verhindernden Beschichtung zur Anwendung. Sofern die Siegelfolie selbst mit einem nichtblockenden Schlußlack versehen ist oder aber eine Antiblockschicht Z aufweist, kann auch mit metallischen Siegelköpfen z.B. aus Aluminium gearbeitet werden.

Die erfindungsgemäße Folie läßt sich so einstellen, daß Stanzabfälle oder andere Folienreste als Ganzes zum Herstellen einer neuen Kunststoff-Folie KF verwendet werden können.

Es versteht sich von selbst, daß alle Bestandteile der Kunststoff-Folie KF, die mit Lebensmitteln in Berührung kommen können, nahezu vollständig frei sind von Restmonomeren und allen Bestandteilen, die den Gebrauchswert der Folie beeinträchtigen könnten.

Die folgenden Beispiele sollen die Erfindung erläutern.

BEISPIELE

Beispiel 1:

Herstellung eines Copolymerisats P1 durch Substanzpolymerisation.

Eine Mischung aus 500 g Methylmethacrylat, 500 g Butylmethacrylat und 14 g Dodecylmercaptan wird mit 1,5 g t-Butylperneodecanoat und 0,5 g t-Butylper-2-ethylhexanoat versetzt, in einen Kunststoffbeutel (Hostaphan ®, Produkt der Fa. Hoechst AG) gefüllt und in einem Wasserbad 24 Stunden bei 45 Grad C und nachfolgend 10 Stunden bei 80 Grad C polymerisiert.

Der auf diesem Wege erhaltene Copolymerisatblock wird in einer Mühle gemahlen. Anschließend wird das Mahlkorn in einem Extruder granuliert und entgast.

Man erhält ein glasklares, sehr leicht fließendes Copolymerisat.

J = 20 ml/g.

Beispiel 2

Herstellung der Mischung M1 aus Copolymerisat P1 und Schlagzähem Polystyrolharz PS1 sowie Herstellung der Kunststoff-Folie KF1

45 Gew.-% des Copolymerisats P1 gemäß Beispiel 1 werden in einem Trommelmischer mit 55 Gew.-% schlagzähem Polystyrolharz PS1 (Cariflex ® TR 1102 der Fa. Shell, ein Lineares Block-Copolymer aus Styrol und Butadien mit einem Styrol-Gehat von 29 Gew.-%) gemischt und die resultierende Mischung M1 anschließend 2 mal mit einem Extruder granuliert und entgast. Es resultiert ein weißes Granulat, welches auf einem Folienextruder bei 200 Grad C zu einer 270 µm dicken Folie KF1 mit einer Breite von 120 mm extrudiert wird.

Beispiel 3

Herstellung von Deckeln aus der Kunststoff-Folie KF1 und Heißsiegelung von Polystyrol-Bechern

Aus der gemäß Beispiel 2 hergestellten Kunststoff-Folie KF1 werden Deckel gestanzt und auf Polystyrol-Becher (Polystyrol-Becher der Fa. Knauer, 200 ml Füllvolumen, Deckeldurchmesser 75 mm) bei einer Siegeltemperatur von 180 Grad C, einem Siegeldruck von 0,8 bar sowie einer Siegelzeit von 0,5 Sekunden gesiegelt. Die Becher sind gut versiegelt und lassen sich gut öffnen (ausgezeichnetes Peeling).

Ebenso werden 1,5 cm breite Streifen aus Polystyrol (Polystyrol 466 J der Fa. BASF AG) mit 1,5 cm breiten Folien

KF1 (Siegelfläche 1,5 cm x 1,0 cm) bei Siegeltemperaturen von 230 Grad C, einem Siegeldruck von 2,5 bar und einer Siegelzeit von 0,5 Sekunden gesiegelt. Die so gesiegelten Streifen zeigen eine Abzugsfestigkeit von 6,6 N.

## Patentansprüche

1. Heißsiegelfähige Kunststoff-Folien KF zum dichtenden Verschließen von Kunststoff-Behältern, bestehend aus einer Mischung M aus 1 bis 99 Gew.-Teilen eines schlagzähen Polystyrol-harzes PS aus einem Blockcopolymeren BC bestehend aus:

   A) 20 bis 80 Gew.-% Styrol und
   B) 80 bis 20 Gew.-% Butadien und/oder Isopren

   und 99 bis 1 Gew.-
   Teilen eines Copolymerisats P, bestehend aus

   p1) 20 bis 90 Gew.-% Methylmethacrylat und/oder Ethylmethacrylat,
   p2) 10 bis 80 Gew.-% mindestens eines Monomeren der Formel:

$$CH_2 = \overset{\overset{\displaystyle CH_3}{|}}{C} - \overset{\overset{\displaystyle O}{\|}}{C} - O - R_1 \qquad (I)$$

   worin $R_1$ für einen Alkylrest mit 3 bis 24 Kohlenstoffatomen steht,

   und

   p3) 0 bis 10 Gew.-% eines oder mehrerer mit den Monomeren p1) und p2) copolymerisierbaren Monomeren, das sich von den Monomeren p1) und p2) unterscheidet,

   wobei sich die Monomeren p1), p2) und p3) zu 100 Gew.-% ergänzen.

2. Heißsiegelfähige Kunststoff-Folie KF gemäß Anspruch 1, dadurch gekennzeichnet, daß die Kunststoff-Folie KF aus 20 bis 80 Gew.-% Blockcopolymeren BC und aus 80 bis 20 Gew.-% Copolymerisat P aufgebaut ist.

3. Heißsiegelfähige Kunststoff-Folien KF gemäß den Ansprüchen 1 bis 2, dadurch gekennzeichnet, daß die Folien eine Dicke zwischen 50 und 500 µm aufweisen.

4. Heißsiegelfähige Kunststsoff-Folien KF gemäß den ANsprüchen 1 bis 3, dadurch gekennzeichnet, daß die Kunststoff-Folien KF mit einer zusätzlichen Schicht Z, die das Ankleben der Kunststoff-Folie KF am Siegelkopf verhindert, belegt ist.

5. Heißsiegelfähige Kunststoff-Folie KF gemäß Anspruch 4, dadurch gekennzeichnet, daß die zusätzliche Schicht Z aus einem Kunststoff aufgebaut ist, der einen Erweichungspunkt über 200 Grad C aufweist.

6. Verwendung der heißsiegelfähigen Kunststoff-Folien KF gemäß den Ansprüchen 1 bis 5 zum Verschließen von Behältern aus (schlagzähem) Polystyrol.

## Claims

1. Heat-sealable plastic foil KF for sealing plastic containers, comprising a mixture M of 1 to 99 parts by weight of an impact-resistant polystyrene resin PS from a block copolymer BC
   comprising:

   A) 20 to 80 percent by weight styrene and
   B) 80 to 20 percent by weight butadiene and/or isoprene

and 99 to 1 parts by weight of a copolymer P, comprising

p1) 20 to 90 weight percent of methyl methacrylate and/or ethyl methacrylate,
p2) 10 to 80 weight percent of at least one monomer of formula:

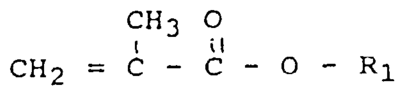 (I)

where R1 denotes an alkyl group with 3 to 24 carbon atoms,

and

p3) 0 to 10 weight percent of one or more monomers which are copolymerisable with monomers p1) and p2) but which is/are different from p1) and p2),

wherein monomers p1), p2) and p3) combine to give 100 percent by weight.

**2.** Heat-sealable plastic foil KF according to claim 1, characterised in that the plastic foil KF comprises 20 to 80 percent by weight block copolymers BC and 80 to 20 percent by weight copolymer P.

**3.** Heat-sealable plastic foils KF according to claims 1 to 2, characterised in that the foils have a thickness of between 50 and 500 μm.

**4.** Heat-sealable plastic foil KF according to claims 1 to 3, characterised in that the plastic foils KF are coated with an additional layer Z which prevents the plastic foil KF from adhering to the sealing head.

**5.** Heat-sealable plastic foil KF according to claim 4, characterised in that the additional layer Z comprises a plastic with a softening point above 200°C.

**6.** Use of the heat-sealable plastic foil KF according to claims 1 to 5 for closing containers of (impact-resistant) polystyrene.

**Revendications**

**1.** Feuilles de matière plastique thermoscellables KF pour l'obturation hermétique de réservoirs en matière plastique, consistant en un mélange M à base de 1 à 99 parties en poids d'une résine de polystyrène résistante au choc PS à base d'un copolymère en bloc BC formé de

A) 20 à 80 % en poids de styrène et
B) 80 à 20 % en poids de butadiène et/ou d'isoprène et de 99 à 1 parties en poids d'un copolymérisat

P formé de

p1) 20 à 90 % en poids de méthacrylate de méthyle et/ou de méthacrylate d'éthyle
p2) 10 à 80 % en poids d'au moins un monomère de formule

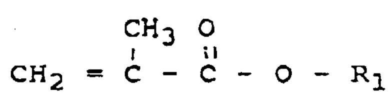 (I)

dans laquelle $R_1$ représente un radical alkyle ayant de 3 à 24 atomes de carbone, et
p3) de 0 à 10 % en poids d'un ou plusieurs monomères copolymérisables avec les monomères p1) et p2) qui se différencient des monomères p1) et p2)

dans lequel les monomères p1), p2) et p3) se complètent à 100 % en poids.

**2.** Feuille de matière plastique thermoscellable KF conformément à la revendication 1, caractérisée en ce que la feuille de matière plastique KF est constituée de 20 à 80 % en poids de copolymères en bloc BC et de 80 à 20 % en poids de copolymérisat P.

**3.** Feuilles de matière plastique thermoscellables KF conformément aux revendications 1 à 2, caractérisées en ce que les feuilles possèdent une épaisseur comprise entre 50 et 500 µm.

**4.** Feuilles de matière plastique thermoscellables KF conformément aux revendications 1 à 3, caractérisées en ce que la feuille de matière plastique KF est recouverte d'une couche supplémentaire z qui empêche l'adhésion de la feuille de matière plastique à la tête de scellement.

**5.** Feuille de matière plastique thermoscellable KF conformément à la revendication 4, caractérisée en ce que la couche supplémentaire Z est constituée d'une matière plastique qui possède un point de ramollissement supérieur à 200°C.

**6.** Utilisation des feuilles de matière plastique KF thermoscellables conformément aux revendications 1 à 5, en vue de l'obturation de réservoirs en polystyrène (résistant aux chocs).